# EUROPEAN PATENT SPECIFICATION

(11) **EP 0 938 807 B1**
(45) Date of publication and mention of the grant of the patent: **09.04.2008**
(21) Application number: 97948195.9
(22) Date of filing: 06.11.1997
(51) Int. Cl.: H04N 7/173, H04N 1/32

(54) **IMPRINTING ID INFORMATION INTO A DIGITAL CONTENT AND READING OUT THE SAME**
EINDRUCKEN VON IDENTIFIKATIONSINFORMATION IN DIGITALEN DATEN UND AUSLESEN DERSELBEN
IMPRIMER DES INFORMATIONS D'IDENTIFICATION DANS UN FICHIER NUMERIQUE ET LIRE CES INFORMATIONS

(30) Priority: 08.11.1996 JP 29683096; 09.09.1997 JP 28246897
(43) Date of publication of application: 01.09.1999
(73) Proprietor: Monolith Co., Ltd., Tokyo 106 (JP)
(72) Inventor: ITO, Hirofumi, Los Angeles, CA 90049 (US); YAMASHITA, Shinichi, Triaxis Corp., Ltd., Kawasaki-shi, Kanagawa 213 (JP)
(74) Representative: Vossius & Partner
(86) International application number: PCT/US1997/020309
(87) International publication number: WO 1998/020672

(56) References cited:
- EP-A- 0 665 486
- EP-A- 0 705 022
- EP-A- 0 734 140
- EP-A- 0 762 417
- WO-A-96/36163
- US-A- 4 890 319
- US-A- 5 467 169
- SCHYNDEL VAN R G ET AL: "A DIGITAL WATERMARK" PROCEEDINGS OF THE INTERNATIONAL CONFERENCE ON IMAGE PROCESSING (IC, AUSTIN, NOV. 13 - 16, 1994, vol. VOL. 2, no. CONF. 1, 13 November 1994, pages 86-90, XP000522615 INSTITUTE OF ELECTRICAL AND ELECTRONICS ENGINEERS
- COX I. J. ET AL: "Secure Spread Spectrum Watermarking for Images, Audio and Video" PROCEEDINGS OF 3RD IEEE INTERNATIONAL CONFERENCE ON IMAGE PROCESSING, LAUSANNE, vol. 3, 16 - 19 September 1996, pages 243-246, XP002060161 NEW YORK (US)

## Description

This invention relates to a method for imprinting identification information (ID) into a digital content and for reading that information.

### BACKGROUND

The information superhighway was advocated in the United States in 1991, and since then distribution of information over networks as represented by the Internet has been forming a new society base. In this new network society, secure encryption and authentication are desired in such fields as electronic commerce because such fields are concerned with safety.

On the other hand, one of the principles of the Internet is the free distribution of digital contents such as pictures, animation and music (hereinafter collectively referred to as contents). Presently, even for valuable content, such as cultural works, illegal copies can be easily made and distributed. Collecting fees for using contents on the Internet, preventing illegal reproduction or modification, and protecting copyrights are serious problems that need to be addressed and solved. These issues are extremely important for the mutual development of a network society and culture.

It is therefore desired to design a general approach to trace illegal copies of digital contents.

### SUMMARY

The invention is as set out in the claims.

### BRIEF DESCRIPTION OF THE DRAWINGS

The above and the other objects, features, and advantages, will become further apparent from the following description of the preferred embodiment taken in conjunction with the accompanying drawings wherein:
Fig. 1 is a diagram showing a network system to which a preferred embodiment of

EP-A-0 665 486, relates to the transmission of user ID data (encoded or fingerprinted..) and to the transmission of decoding programs (display and print agents). However, the IDs are not embedded and a separate key for display is necessary. the present invention is applied;
Fig. 2 is a flowchart showing an operation for ID imprinting when a PC 4 receives a content;
Fig. 3 is a diagram showing a structure relative to ID imprinting within the PC 4;
Fig. 4 is a diagram showing the internal structure of an ID imprinter 18 from Fig. 3;
Fig. 5 is a diagram showing another structure of the ID imprinter 18 shown in Fig. 3;
Fig. 6 is a diagram showing the relationship between ID and a spatial frequency, expressed using a spectrum domain;
Fig. 7 is a diagram showing ID of a user converted into an actual image data pattern by IFFT section 40 in Fig. 5;
Fig. 8 is a diagram explaining a method for imprinting a bit pattern shown in Fig. 7 onto a decoded image;
Fig. 9 is a diagram showing a spectrum domain of Fig. 6 including fixed reference information superimposed therein;
Fig. 10 is a flowchart showing an operation of a detection device for reading ID imprinted in the content;
Fig. 11 is a diagram showing a structure of ID reader within a detection device;
Fig. 12 is a diagram showing another structure of the ID reader shown in Fig. 11;
Fig. 13 is a diagram showing an area consisting of 3x3 pixels;
Fig. 14 is a diagram showing the luminance of the 3x3 pixel area of Fig. 13 expressed using modulo 3 arithmetic;
Fig. 15 is a diagram showing a data pattern to be imprinted as ID into the 3x3 pixel area of Fig. 13; and
Fig. 16 is a diagram showing the state in which either an offset 0 or ±1 is added to the luminance of respective pixels to change the state shown in Fig. 14 into that shown in Fig. 15.

### DETAILED DESCRIPTION OF THE EMBODIMENTS

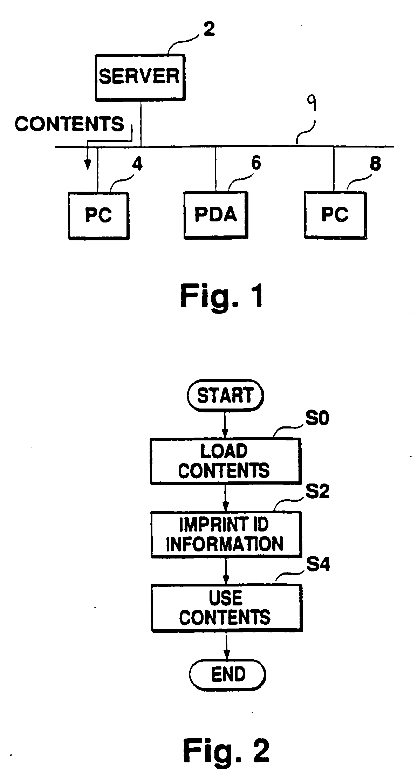

The present invention may be applied to a network system comprising a server 2 and client devices connected on a network 9, as shown in Fig. 1. In this drawing, client devices include PCs 4 and 8 and a Personal Digital Assistance (PDA) 6, which are information terminals.

The server 2 supplies a content to the client devices so that ID imprinting is carried out on the client side. Here, as an example, the PC 4 is provided with an imprinting function.

Fig. 2 is an operational flowchart of the PC 4 when it receives a content. The PC 4 first downloads the content from the server 2 over the network 9 (S0). A program for decoding or decrypting the content is also downloaded from the server. This program may be included in a downloaded viewer or browser that turns the encrypted content into a usable form. A user ID information associated with the PC 4 or its user is embedded in the viewer. The ID is imprinted in the content when the viewer decodes the content (S2). After the ID is imprinted, use of the content such as for displaying or copying is enabled.

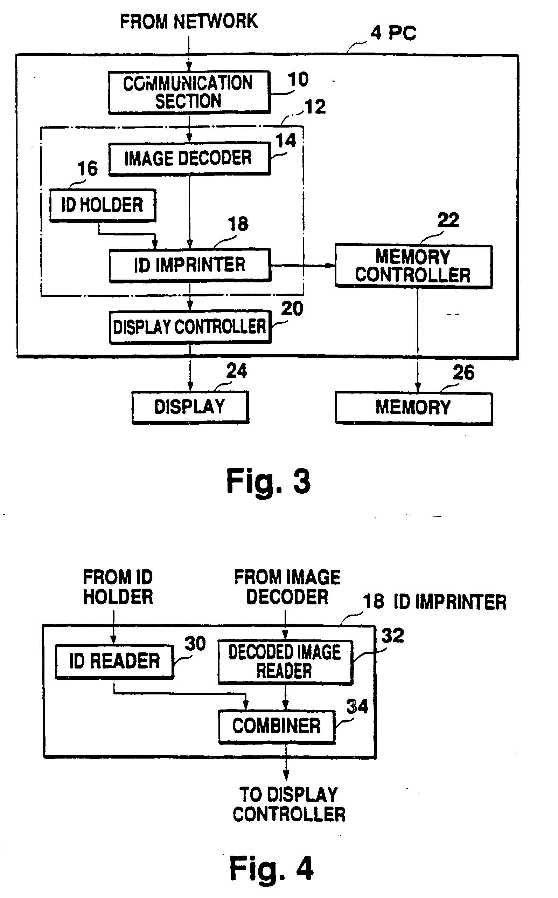

Fig. 3 shows the structure relating to ID imprinting within the PC 4. In the following example, the content is assumed to be an image. The user first sends a request for a content to a content manager or supplier (not shown) which runs the server 2. The content manager, after authentication of the user, transmits the requested content and a viewer 12 to the PC 4 via the network. These are received by a communication section 10 of the PC 4.

The viewer 12 received in the PC 4 may now be used to decrypt and display the received content. As shown in Fig. 3, the content is inputted to the viewer 12. The viewer 12 comprises an image decoder 14 for decoding an image which has been compressed or encoded by the content manager before transmission to the PC 4, an ID holder 16 for storing IDs, and an ID imprinter 18 for imprinting the ID read from the ID holder 16 onto a decoded image. The image decoder 14 has a decryption algorithm. The content manager transmits the viewer 12 after storing an ID unique to the user requesting the content in the ID holder 16. The viewer 12 may be a plug-in type device that is incorporated into existing Internet browsers.

As a measure for preventing use of content before ID imprinting, for instance, a memory area in the PC 4 that stores a content without an ID imprinted therein is protected by the ID imprinter 18 so that reading of such a content is prevented. Specifically, the system is designed so as to be interrupted or reset if a read access is made to the memory area containing a content without an ID. Once an ID is imprinted, this protection is removed, enabling the image to be used as desired.

As shown in Fig. 3, an image having an ID imprinted therein is transmitted to a display controller 20, where it is converted into display format for a display 24. A memory controller 22 writes data to a storage device 26, which may be a hard disc unit or the like, to store the decoded image therein.

Fig. 4 is a diagram showing an internal structure of the ID imprinter 18 shown in Fig. 3 according to one embodiment of the present invention. The imprinter 18 comprises an ID reader 30 for reading an ID from the ID holder 16, a decoded image reader 32 for reading a decoded image, and a combiner 34 for imprinting an ID into a predetermined location such as the leading, middle, or trailing part of the decoded image data. When an ID consists of n bits of data and the luminance of image pixels in the content is expressed in multiscale, the combiner 34 for instance sequentially replaces the least significant bits (LSBs) of the luminance of n pixels from the leading part of the image by the n bits of ID data.

In operation, the user of the PC 4 requests the server 2 run by the content manager to transmit a content. The content is encrypted on the server 2 and then sent with the viewer 12 to the PC 4 via a network. The communication section 10 of the PC 4 receives the transmitted content, and forwards it to the viewer 12, which has been received from the network. Within the viewer 12, the image decoder 14 decodes the content, and forwards it to the ID imprinter 18. The ID reader 30 in the ID imprinter 18 reads the ID from the ID holder 16 and supplies it to the combiner 34. The decoded image reader 32 reads the decoded image, and forwards it to the combiner 34. Having received the ID and the decoded image, the combiner 34 replaces the LSBs of the luminance in the aforementioned manner to thereby imprint the ID onto the image. The image having the ID is displayed on the display 24. The ID imprinted image may also be supplied to the memory 26. If a subsequent unauthorized attempt is made to modify or reproduce the ID-imprinted image stored in the memory 26, copies of such modified or reproduced image will carry the ID information imprinted in the image stored in the memory 26. It is therefore possible to identify the party making the unauthorized copies.

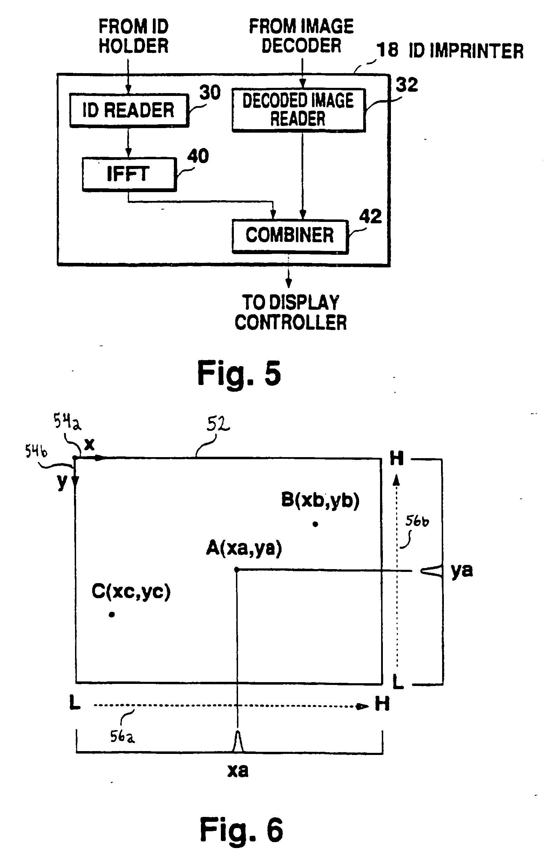

Fig.5 is a diagram showing an alternative structure of the ID imprinter 18 according to another embodiment of the present invention. In this figure, the same members as shown in Fig.4 are given the same reference numerals and their explanation is not repeated. The structure in Fig. 5 comprises an IFFT section 40 for performing an inverse fast Fourier transform (IFFT) on a signal representing an ID, and a combiner 42 for combining the transformed ID (i.e. the output of the IFFT section 40) into the decoded image.

In this embodiment, the ID information is represented as a signal in the frequency domain. When imprinting such an ID, an inverse orthogonal transform is applied to the frequency signal representing the ID information to generate a bit pattern in the content domain, which is then imprinted in the digital content. In this specification, the term "content domain" is used to denote the domain representing the data in the digital content, while the term "frequency domain" is used to denote a mapping of the content domain through an orthogonal transform. When the content is a two-dimensional image (an example used in the illustration below), the content domain is a two-dimensional space domain, and the corresponding frequency domain is a two-dimensional spatial frequency domain. When the content is audio, the content domain may be a time domain and the frequency domain may be a one-dimensional frequency domain.

Fig. 6 is a diagram showing examples of representations of ID information as signals in the frequency domain. A two-dimensional image is used as an example of a content. The rectangle 52 represents a two-dimensional spatial frequency domain for the two-dimensional space domain. The arrows 54a and 54b indicate the x and y directions of the corresponding space domain, whereas the arrows 56a and 56b indicate the directions of increased frequencies in the frequency domain corresponding to the x and y directions of the space domain, respectively. In this frequency domain, signals representing the ID information for three users A, B, and C are plotted at their respective positions (xa, ya), (xb, yb), and (xc, yc). For user A, for example, the frequency signal has a steep peak centered at the point (xa, ya). The steep peak may have finite widths, or it may be a delta-function. In this manner, the ID information for a user is represented by a point in a two-dimensional frequency domain.

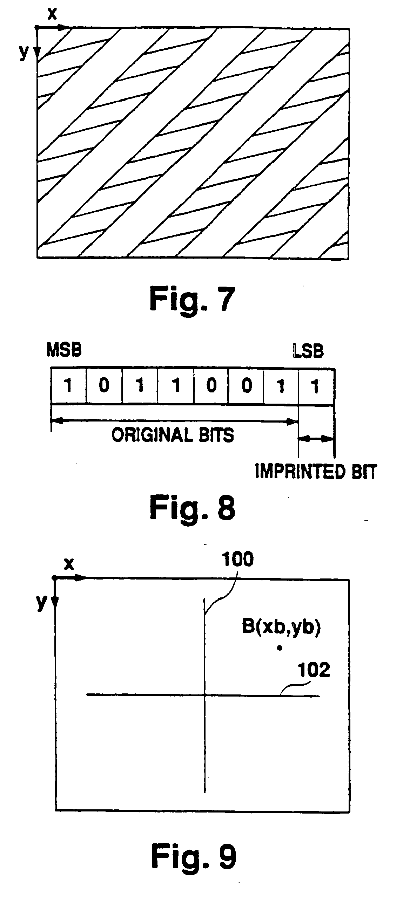

Fig. 7 is a diagram showing user A's ID information converted into a bit pattern in the space domain by the IFFT section 40. The pixels in the bit pattern showing in Fig. 7 have a value of "1" in the shaded areas and "0" in the unshaded areas. In this example, since the frequency signal representing user A's ID information is located substantially at the center of the spectrum domain with respect to both the x and y directions (see Fig. 6), the spatial frequencies of the shaded and unshaded areas shown in Fig. 7 are more or less the same in the x and y directions. For user B, for example, since the frequency signal representing that user's ID information has higher frequencies in both directions, the shaded and unshaded areas in the resulting bit pattern will be narrower (not shown).

Fig. 8 is a diagram explaining a method for imprinting a bit pattern containing ID information, such as that shown in Fig. 7, onto the decoded image (the digital content). In this example, luminance values of the pixels of the decoded image are expressed in eight-bit binary data. The ID information is imprinted in the decoded image by replacing the LSB of the luminance value of each pixel by the value of the corresponding pixel in the bit pattern containing the ID information. Thus, in this example, the LSB of a pixel in the decoded image located in an area corresponding to a shaded area in Fig. 7 is replaced by "1", and the LSB of a pixel located in an area corresponding to a unshaded area in Fig. 7 is replaced by "0." The remaining seven bits of the luminance value of the pixel are unchanged from the decoded image. Thus, in this embodiment, an ID is imprinted over the entire image or an extended portion thereof. This method is advantageous as a countermeasure against partial cut-off of the content, as the extended portion over which the ID is imprinted may be chosen such that the cut off of which would substantially impair the usefulness of the content.

Specific embodiments of the present invention for imprinting ID information have been described. Many variations of the embodiments are possible, some of which are described below.

First, although a content is distributed via a network in the above-described embodiments, the content may also be distributed by storing it in a medium such as a CD-ROM or a floppy disc and loading it onto a PC. The embodiments described above are applicable to such other methods of content distribution.

Second, although a still image is used in the above-described embodiments as an example of a digital content, the methods may be applied to other types of digital content, such as motion images (e.g. video) or audio content. For motion images, ID information may be divided into plural portions and different portions may be imprinted into different image frames. For audio content, the image decoder 14, the display controller 20, and the display 24 in Fig. 3 may be replaced by an audio decoder, an audio output controller, and a speaker, respectively. Further, one-dimensional IFFT is sufficient for audio content, as it is one dimensional data. In addition, although ID information is imprinted into the bits of the luminance values in the case of images, it may be imprinted into the LSBs of frequency signals or the like in the case of an audio content.

Third, an ID is not necessarily stored in the LSBs of a content. Any bits of quantified data may store the ID as long as the effects on the perceived quality of the content are insignificant. It should be noted that even perceptible imprinting may be employed as a visual watermark.

Fourth, although an ID is imprinted into a lower bit irrespective of upper bits in the aforementioned embodiment, an offset may be given to a lower bit such that the whole data including upper bits contains the ID.

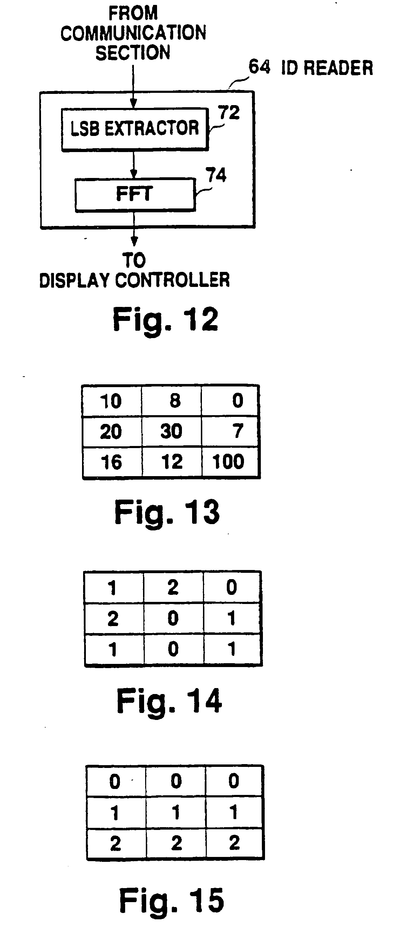

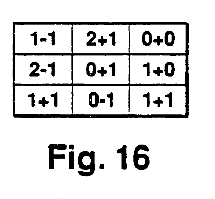

Fig.13 shows an example of a 3x3 pixel area in a content such as an image, where the luminance of the respective pixels are "10, 8, 0...." as shown. Fig. 14 is a diagram showing the luminance of the same 3x3 pixel area in the image, but expressed using modulo 3 arithmetic. Using this arithmetic, the corresponding value of a pixel whose luminance is 10, for instance, becomes 1. Fig. 15 is a diagram showing a sample data pattern representing ID information, generated using methods described earlier, to be imprinted into the 3x3 pixel area of the image shown in Fig. 14. The ID pattern is also expressed in modulo 3 arithmetic. In this example, 0's, 1's, and 2's are to be imprinted into the first, second, and third rows of pixels, respectively. Fig. 16 is a diagram showing the state in which an offset of - 1, 0, or 1 is added to each pixel value of the 3x3 pixel area shown in Fig. 14 to obtain the corresponding pixel value of the 3x3 pixel area shown in Fig. 15. In operation, the ID information is imprinted into the 3x3 pixel area of the image shown in Fig. 13 by adding to each pixel an offset value -1, 0 or 1 according to the calculation shown in Fig. 16. According to this method, an offset is added to the luminance data as a whole, so that the whole data, including the upper bits, contain the ID.

Since this method can prevent direct exposure of an ID unlike imprinting it in the lower bits, security is increased. Another advantage is that data other than "0" and "1", such as "2", is also imprintable. Although modulo 3 arithmetic is mentioned here, modulo arithmetic based on other numbers may be used. Any other mathematical, boolean algebraic or cryptographic approach may be employed.

Fifth, in the aforementioned embodiments, the combiner 34 (Fig. 4) imprints ID information into a predetermined location such as the leading part of the data sequence. The predetermined location may be one where, when slight shifts in data values are given, the effects are hardly perceivable. Thus, the quality of the content (quality of a still image, motion image, sound, text and so forth) is hardly influenced.

Sixth, in the embodiment shown in Fig. 3, the image decoder 14 and the ID imprinter 18 are separately provided. These elements may be integrated into one element to thereby allow simultaneous execution of image restoration and ID imprinting.

Seventh, in the embodiment shown in Fig. 3, the program for decrypting and/or decoding is included in a viewer or a browser. The program may take any other form as long as it can restore the content into a suitable format for use by the user.

Eighth, although the ID information for one user is represented by one point in the frequency domain (Fig. 6), the ID information may be represented in other forms. For instance, a set of a plurality of discrete points or a two dimensional region may be employed to represent the ID information for one user.

Ninth, in a frequency domain representation such as that shown in Fig. 6, reference information such as two straight lines 100, 102 shown in Fig. 9 may be added. This reference information can be utilized when reading the imprinted ID information from a content since its position is fixed and known in the frequency domain. By the help of the reference information, the location of the ID can be specified with more certainty to thereby identify the user represented by that ID even when the content has been modified through, e.g., rotation or enlargement.

Methods for imprinting ID information have been described. Methods for reading imprinted ID information will be described next.

If a content is illegally reproduced or modified (hereinafter referred to as an illegal action), it is desired that the unauthorized offender be identified. This can be achieved by reading the ID information imprinted into the content. A device for reading imprinted ID information (hereinafter referred to as a detector) may be provided anywhere in a network. A proxy server, for instance, may be equipped with such a detector.

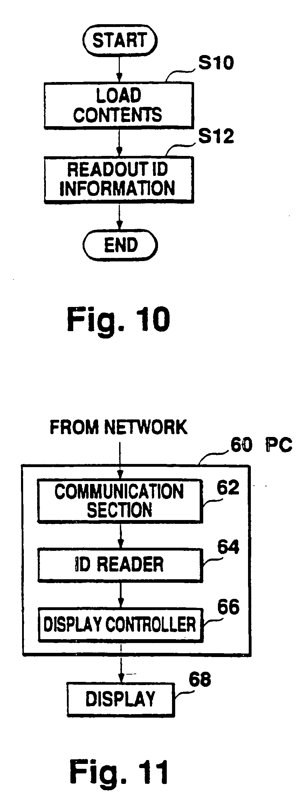

Fig. 10 is a flowchart showing the operation of a detector. The detector loads a content from a storage device or a memory medium (S10), and reads the ID information imprinted therein (S12). If an illegal action is detected, the detector resorts to appropriate measures, such as notifying a content manager of the unauthorized offender.

Fig. 1 1 is a diagram showing an embodiment of the detector for reading ID information imprinted in a content. The detector 60, which may be in a PC, comprises a communication section 62 for obtaining a content from a network, an ID reader 64 for reading the ID from the obtained content, and a display controller 66 for controlling a display 68 so as to display the read ID.

In this embodiment, the ID reader 64 extracts information from a predetermined location, for instance, the LSBs at a leading part of a data sequence of the obtained content, and reconstructs the ID based on the extracted data. If this process does not result in any ID information that meaningfully identifies a user, then the content is judged to be original, i.e., having no user ID information imprinted. On the other hand, if a content with a user's ID imprinted therein is found on a network, the user identified by the imprinted ID may have illegally distributed the content. Based on the ID, the possible illegal action is traced.

Fig. 12 is a diagram showing an alternative ID reader according to another embodiment of the present invention. This ID reader operates to read an ID imprinted as spatial frequency information in a content. The ID reader 64 comprises an LSB extractor 72 for extracting the LSBs from the obtained content to form a bit pattern, and a FFT section 74 for performing fast Fourier transform (FFT) on the bit pattern formed by the extracted LSBs.

The operation here is a reverse operation of that shown in Figs. 6 to 8. The LSBs, which represent the imprinted ID information, are first extracted (Fig. 8). The bit pattern formed by the LSBs in the content is then detected (Fig. 7). Spatial frequencies of the bit pattern in the x and y directions, respectively, are calculated by the FFT section 74 from the bit pattern. In the sample bit pattern shown in Fig. 7, the FFT calculation reveals user A's ID shown in Fig. 6. The offender is thereby identified as user A.

This method is advantageous in that it does not require comparing the suspect content and the original content in order to detect the ID.

The above-described methods for reading imprinted ID information may have many variations. Each variation of the ID imprinting method described earlier in this specification may have a corresponding variation of the ID reading method. For example, the ID can be read in cases where an offset has been added to a lower bit using a method such as the one described earlier with reference to Figs. 13-16. Further, when an ID is imprinted in a predetermined location of the content, such as a location where shifts in data values do not produce significant perceivable effects, the readout method is provided to detect the same location consistent with the ID imprinting method. Generally speaking, ID reading can be done as long as the imprinter and the reader adopt the same imprinting/readout scheme.

In addition, although the detector is connected to a network in the above embodiments, it may be an off-line, stand alone type if it checks only contents stored in storage media.

Moreover, in the described embodiments, the ID imprinting is carried out at the information terminals where the content is used, i.e. at the user end. It will be apparent to a skilled artisan, however, that the various methods described herein for imprinting ID information in a content are equally applicable to a content distribution scheme in which ID imprinting is carried out at the content provider end.

It will, of course, be understood that modifications of the present invention, in its various aspects, will be apparent to those skilled in the art. Other embodiments are also possible, their specific designs depending upon the particular application: Therefore, the scope of the invention should not be limited by the particular embodiments herein described but should be defined only by the appended claims.

## Claims

1. A method at a server (2) for distributing a digital content via a network, said method comprising:
receiving via the network a request for a digital content from an information terminal (4, 6, 8, 60), the request identifying the information terminal or a user thereof;
obtaining an encoded version of the digital content;
providing a decoding program (12) such that ID information representing the information terminal or user is embedded therein, wherein the decoding program (12) is programmed to perform the function of decoding the encoded digital content at the information terminal to automatically produce a decoded digital content having the ID information imprinted therein;
transmitting via the network the decoding program (12) to the information terminal; and
transmitting via the network the encoded digital content to the information terminal in response to the request.

2. The method of claim 1 wherein the ID information is imprinted into the decoded digital content over an extended portion of the decoded digital content.

3. The method of claim 2 wherein the extended portion of the decoded digital content defines a content domain, and wherein the ID information represented as a signal in a frequency domain associated with the content domain.

4. The method of claim 3 wherein the frequency domain is a in of the content domain via an orthogonal transform, and wherein the ID information imprinting comprises:
inverse-transforming the frequency-domain representation of the ID information into a content-domain representation of the ID information via an inverse of the orthogonal transform; and
imprinting the inverse-transformed ID information into the decoded digital content.

5. The method of claim 3 wherein reference information is imprinted into the decoded digital content in the frequency domain.

6. The method of claim 1 wherein the decoding program (12) is programmed to also perform the function of enabling use of the decoded digital content at the information terminal (4, 6, 8, 60) after imprinting the ID information.

7. The method of claim 1 wherein the decoding program (12) is a plug in type program.

8. The method of claim 1 wherein the decoding of the encoded digital content to produce the decoded digital content having the ID information imprinted therein comprises simultaneously decoding the encoded digital content and imprinting the ID information into the decoded digital content.

## Patentansprüche

1. Verfahren zum Verteilen eines digitalen Inhalts über ein Netz an einem Server (2), welches folgende Schritte aufweist:
Empfangen einer Anforderung eines digitalen Inhalts von einem Informationsendgerät (4, 6, 8, 60) über das Netz, wobei die Anforderung das Informationsendgerät oder einen Benutzer von diesem identifiziert,
Erhalten einer codierten Version des digitalen Inhalts,
Bereitstellen eines Decodierprogramms (12), so dass Kennungsinformation, welche das Informationsendgerät oder den Benutzer repräsentiert, darin eingebettet wird, wobei das Decodierprogramm (12) programmiert wird, um die Funktion des Decodierens des codierten digitalen Inhalts an dem Informationsendgerät auszuführen, um automatisch einen decodierten digitalen Inhalt mit der darin eingedruckten Kennungsinformation zu erzeugen,
Übertragen des Decodierprogramms (12) über das Netz zum Informationsendgerät und
Übertragen des codierten digitalen Inhalts über das Netz zum Informationsendgerät, ansprechend auf die Anforderung.

2. Verfahren nach Anspruch 1, wobei die Kennungsinformation in den decodierten digitalen Inhalt über einen erweiterten Teil des decodierten digitalen Inhalts eingedruckt wird.

3. Verfahren nach Anspruch 2, wobei der erweiterte Teil des decodierten digitalen Inhalts einen Inhaltsbereich definiert und wobei die Kennungsinformation als ein Signal in einem dem Inhaltsbereich zugeordneten Frequenzbereich repräsentiert wird.

4. Verfahren nach Anspruch 3, wobei der Frequenzbereich eine Abbildung des Inhaltsbereichs über eine orthogonale Transformation ist und wobei das Eindrucken der Kennungsinformation aufweist:
Umkehrtransformieren der Frequenzbereichsdarstellung der Kennungsinformation in eine Inhaltsbereichsdarstellung der Kennungsinformation durch eine Umkehrung der orthogonalen Transformation und
Eindrucken der umkehrtransformierten Kennungsinformation in den decodierten digitalen Inhalt.

5. Verfahren nach Anspruch 3, wobei die Referenzinformation in den decodierten digitalen Inhalt im Frequenzbereich eingedruckt wird.

6. Verfahren nach Anspruch 1, wobei das Decodierprogramm (12) programmiert wird, um auch die Funktion des Ermöglichens einer Verwendung des decodierten digitalen Inhalts an dem Informationsendgerät (4, 6, 8, 60) nach dem Eindrucken der Kennungsinformation auszuführen.

7. Verfahren nach Anspruch 1, wobei das Decodierprogramm (12) ein Erweiterungsprogramm ist.

8. Verfahren nach Anspruch 1, wobei das Decodieren des codierten digitalen Inhalts, um den decodierten digitalen Inhalt mit der darin eingedruckten Kennungsinformation zu erzeugen, das gleichzeitige Decodieren des codierten digitalen Inhalts und Eindrucken der Kennungsinformation in den decodierten digitalen Inhalt aufweist.

## Revendications

1. Procédé à un serveur (2) pour distribuer un contenu numérique via un réseau, ledit procédé comprenant le fait de :
recevoir, via le réseau, une demande concernant un contenu numérique pour un terminal d'informations (4, 6, 8, 60), la demande identifiant le terminal d'informations ou un utilisateur de ce dernier ;
obtenir une version encodée du contenu numérique ;
procurer un programme de décodage (12) de façon à intégrer les informations d'identité représentant le terminal de formation ou l'utilisateur, le programme de décodage (12) étant conçu pour mettre en oeuvre la fonction de décodage du contenu numérique encodé au terminal d'informations pour obtenir de manière automatique un contenu numérique décodé dans lequel sont imprimées les informations d'identité ;
transmettre, via le réseau, le programme de décodage (12) au terminal d'informations ; et
transmettre, via le réseau, le contenu numérique encodé au terminal d'informations en réponse à la demande.

2. Procédé selon la revendication 1, dans lequel les informations d'identité sont imprimées dans le contenu numérique décodé sur une portion étendue du contenu numérique décodé.

3. Procédé selon la revendication 2, dans lequel la portion étendue du contenu numérique décodé définit un domaine de contenu, et dans lequel les informations d'identité sont représentées sous la forme d'un signal dans un domaine de fréquence associé au domaine du contenu.

4. Procédé selon la revendication 3, dans lequel le domaine de fréquence est un mappage du domaine de contenu via une transformée orthogonale, et dans lequel l'impression des informations d'identité comprend le fait de :
soumettre à une transformée inverse la représentation du domaine de fréquence des informations d'identité pour obtenir une représentation du domaine de contenu des informations d'identité via une inversion de la transformée orthogonale ; et
imprimer les informations d'identité soumises à une transformée inverse dans le contenu numérique décodé.

5. Procédé selon la revendication 3, dans lequel les informations de référence sont imprimées dans le contenu numérique décodé dans le domaine de fréquence.

6. Procédé selon la revendication 1, dans lequel le programme de décodage (12) est programmé pour également mettre en oeuvre la fonction d'activation de l'utilisation du contenu numérique décodé au terminal d'informations (4, 6, 8, 60) après l'impression des informations d'identité.

7. Procédé selon la revendication 1, dans lequel le programme de décodage (12) est un programme de type plugiciel.

8. Procédé selon la revendication 1, dans lequel le décodage du contenu numérique encodé pour obtenir le contenu numérique décodé dans lequel sont imprimées les informations d'identité comprend, de manière simultanée, le décodage du contenu numérique encodé et l'impression des informations d'identité dans le contenu numérique décodé.
